# FASCICULE DE BREVET EUROPEEN

(11) **EP 2 914 443 B1**
(45) Date de publication et mention de la délivrance du brevet: **14.12.2016**
(21) Numéro de dépôt: 13783306.7
(22) Date de dépôt: 23.10.2013
(51) Int. Cl.: B60C 1/00, C08K 7/18, C08L 7/00, C08L 33/08

(54) **PNEUMATIQUE À ADHÉRENCE SUR GLACE AMÉLIORÉE**
REIFEN MIT VERBESSERTER GRIFFIGKEIT AUF EIS
TYRE WITH IMPROVED GRIP ON ICE

(30) Priorité: 30.10.2012 FR 1260375
(43) Date de publication de la demande: 09.09.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FUKASAWA, Hiroko, Tokyo 163-1073 (JP); PAGANO, Salvatore, 63040 Clermont-Ferrand Cedex 9 (FR)
(74) Mandataire: Ribière, Joel
(86) Numéro de dépôt international: PCT/EP2013/072153
(87) Numéro de publication internationale: WO 2014/067827

(56) Documents cités:
- WO-A1-03/066352
- WO-A1-2011/073188
- FR-A1- 2 951 182
- FR-A1- 2 955 328
- FR-A1- 2 966 157

## Description

### 1. DOMAINE DE L'INVENTION

L'invention est relative aux compositions caoutchouteuses utilisées comme bandes de roulement de pneumatiques pour véhicules, en particulier de pneumatiques « hiver » aptes à rouler sur des sols recouverts de glace ou verglas sans être pourvus de clous (aussi appelés pneumatiques "*studless*").

Elle est plus particulièrement relative aux bandes de roulement de pneumatiques hiver qui sont spécifiquement adaptés à un roulage sous des conditions dites de "glace sèche" ou "glace froide" correspondant à un domaine de températures inférieur à -5°C, tout en satisfaisant aussi aux conditions dites de "glace fondante" rencontrées dans un domaine de températures typiquement comprises entre -5°C et 0°C, domaine dans lequel de manière connue, la pression des pneumatiques au passage d'un véhicule provoque une fusion superficielle de la glace qui se recouvre d'un mince film d'eau nuisible à l'adhérence de ces pneumatiques.

### 2. ETAT DE LA TECHNIQUE

Pour éviter les effets néfastes des clous, notamment leur forte action abrasive sur le revêtement du sol lui-même et un comportement routier notablement dégradé sur sol sec, les manufacturiers de bandages ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles (i.e., qui peuvent se dissoudre dans l'eau) dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le pneumatique et le sol. A titre d'exemples de telles poudres hydrosolubles, on peut citer par exemple l'emploi de poudre de cellulose, de PVA (alcool polyvinylique) ou d'amidon, de poudres de gomme de guar ou de gomme de xanthane, ou encore de poudre de sulfate de magnésium ou de potassium (voir par exemple demandes de brevet JP 3-159803, JP 2002-211203, WO 2008/080750, WO 2008/080751, WO 2010/009850, WO 2011/073188, WO 2011/086061, WO 2012/052331, WO 2012/085063). Ces solutions ne sont toutefois pas efficaces pour des conditions de roulage sur glace sèche (non fondante).

### 3. BREVE DESCRIPTION DE L'INVENTION

Poursuivant leurs recherches, les Demanderesses ont découvert une composition de caoutchouc spécifique qui offre une excellente adhérence aux pneumatiques à la fois sur glace sèche et sur glace fondante.

En conséquence, la présente invention concerne un pneumatique dont la bande de roulement comporte une composition de caoutchouc à base d'au moins un élastomère diénique, plus de 30 pce d'un plastifiant liquide, entre 50 et 150 pce d'une charge renforçante non-noire, optionnellement du noir de carbone à un taux inférieur à 3 pce, entre 5 et 50 pce d'une résine polymère liquide photoréticulable, et entre 2 et 60 pce de microparticules de sel métallique hydrosoluble.

Les pneumatiques de l'invention sont particulièrement destinés à équiper des véhicules à moteur de type tourisme, incluant les véhicules 4x4 (à quatre roues motrices) et véhicules SUV ("*Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs).

Bien entendu, l'invention s'applique aux cas où le pneumatique et ladite résine polymère se trouvent tous deux soit à l'état cru (i.e., non réticulé), soit à l'état réticulé (i.e., après réticulation ou vulcanisation).

L'invention ainsi que ses avantages seront aisément compris à la lumière de la description et des exemples de réalisation qui suivent.

### 4. DESCRIPTION DETAILLEE DE L'INVENTION

Dans la présente description, sauf indication expresse différente, tous les pourcentages (%) indiqués sont des pourcentages en masse. L'abréviation « pce » (en anglais « phr ») signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

La composition de caoutchouc de la bande de roulement du pneumatique de l'invention est donc à base d'au moins :
- un (au moins un) élastomère diénique ;
- un (au moins un) plastifiant liquide ;
- une (au moins une) charge renforçante non-noire ;
- optionnellement du noir de carbone à un taux inférieur à 3 pce ;
- une (au moins une) résine polymère liquide photoréticulable ; et
- des microparticules d'un (au moins un) sel métallique hydrosoluble.

Tous ces composants sont décrits en détail ci-après.

Par l'expression "à base de", il faut bien entendu comprendre une composition comportant le mélange des différents constituants utilisés ou (le cas échéant) leur produit de réaction, certains de ces constituants de base étant notamment susceptibles de, ou destinés à réagir entre eux, au moins en partie, lors des différentes phases de fabrication de la composition, en particulier au cours de sa réticulation ou vulcanisation.

### 4.1. Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un autre mode préférentiel de l'invention, on utilise 50 à 100 pce de caoutchouc naturel ou polyisoprène de synthèse, en particulier en coupage avec au plus 50 pce d'un polybutadiène ayant un taux de liaisons cis-1,4 supérieur à 90%.

Selon un mode de réalisation plus particulier et préférentiel, l'élastomère diénique utilisé est majoritairement, et plus préférentiellement pour plus de 50 pce (pour rappel, "pce" ou "*phr*" en anglais signifiant parties en poids pour cent parties d'élastomère ou caoutchouc), du caoutchouc naturel (NR) ou un polyisoprène de synthèse (IR). Plus préférentiellement encore, ledit caoutchouc naturel ou polyisoprène de synthèse est alors utilisé en coupage avec un polybutadiène (BR) ayant un taux de liaisons cis-1,4 qui est de préférence supérieur à 90%.

Selon un autre mode préférentiel de l'invention, est utilisé 50 à 100 pce d'un polybutadiène ayant un taux de liaisons cis-1,4 supérieur à 90%, en particulier en coupage avec au plus 50 pce de caoutchouc naturel ou polyisoprène de synthèse.

Selon un autre mode de réalisation particulier et préférentiel, l'élastomère diénique utilisé est majoritairement, et plus préférentiellement pour plus de 50 pce, un polybutadiène (BR) ayant un taux de liaisons cis-1,4 supérieur à 90%. Plus préférentiellement encore, ledit polybutadiène est alors utilisé en coupage avec du caoutchouc naturel ou un polyisoprène de synthèse.

Selon un autre mode de réalisation particulier et préférentiel, l'élastomère diénique utilisé est un coupage (mélange) binaire de NR (ou IR) et de BR, ou un coupage ternaire de NR (ou IR), BR et SBR. De préférence, dans le cas de tels coupages, la composition comporte entre 25 et 75 pce de NR (ou IR) et entre 75 et 25 pce de BR, auxquels peut être associé ou non un troisième élastomère (coupage ternaire) à un taux inférieur à 30 pce, notamment inférieur à 20 pce. Ce troisième élastomère est de préférence un élastomère SBR, notamment un SBR solution (dit "SSBR"). Plus préférentiellement encore, dans le cas d'un tel coupage, la composition comporte de 35 à 65 pce de NR (ou IR) et de 65 à 35 pce de BR. Le BR utilisé est de préférence un BR ayant un taux de liaisons cis-1,4 supérieur à 90%, plus préférentiellement supérieur à 95%.

Aux élastomères diéniques des compositions selon l'invention pourraient être associés, en quantité minoritaire, des élastomères synthétiques autres que diéniques, voire des polymères autres que des élastomères, par exemple des polymères thermoplastiques.

### 4.2. Agent plastifiant liquide

La composition de caoutchouc selon l'invention a pour autre caractéristique essentielle de comporter plus de moins 30 pce d'un agent plastifiant liquide (à 23°C) dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les agents plastifiants liquides choisis dans le groupe constitué par les huiles polyoléfiniques, les huiles naphténiques, les huiles paraffiniques, les huiles DAE (*Distillate Aromatic Extracts),* les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts),* les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition selon l'invention est de préférence supérieur à 40 pce, plus préférentiellement compris dans un domaine de 50 à 100 pce.

Selon un autre mode de réalisation préférentiel, les compositions selon l'invention peuvent comporter aussi, à titre de plastifiant solide (à 23°C), une résine hydrocarbonée présentant une Tg supérieur à +20°C, de préférence supérieure à +30°C, telles que décrites par exemple dans les demandes WO 2005/087859, WO 2006/061064 et WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "*Rubber Tires and Mechanical Goods*"). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry),* selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Le taux d'agent plastifiant total (i.e., plastifiant liquide plus, le cas échéant, résine hydrocarbonée solide) est de préférence compris entre 40 et 100 pce, plus préférentiellement compris dans un domaine de 50 à 80 pce.

### 4.3. Charge renforçante non-noire

Par "charge renforçante non-noire", doit être entendu ici toute charge inorganique voire organique autre que du noir de carbone, quelles que soient sa couleur (autre que noire) et son origine (naturelle ou de synthèse), parfois appelée charge "minérale", charge "blanche" ou charge "claire" par opposition au noir de carbone, cette charge non-noire étant capable de renforcer à elle seule, sans autre moyen qu'un éventuel agent de couplage intermédiaire, une composition de caoutchouc destinée à la fabrication d'une bande de roulement de bandage, en d'autres termes apte à remplacer, dans sa fonction de renforcement, un noir de carbone conventionnel de grade pneumatique pour bande de roulement.

Préférentiellement, la charge renforçante non-noire est une charge inorganique, plus particulièrement une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices « Ultrasil » 7000 de la société Evonik, les silices « Zeosil » 1165 MP, 1135 MP et 1115 MP de la société Rhodia, la silice « Hi-Sil » EZ150G de la société PPG, les silices « Zeopol » 8715, 8745 ou 8755 de la Société Huber, les silices telles que décrites dans la demande WO 03/016387.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc selon l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement selon l'invention sont destinées à des pneumatiques à faible résistance au roulement, la charge renforçante non-noire utilisée, en particulier s'il s'agit d'une charge inorganique renforçante telle que silice, a de préférence une surface BET comprise entre 60 et 350 m2/g. Un mode de réalisation avantageux de l'invention consiste à utiliser une charge non-noire, en particulier une charge inorganique renforçante telle que silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge non-noire présentant une surface spécifique BET inférieure à 130 m²/g, préférentiellement dans un tel cas comprise entre 60 et 130 m²/g (voir par exemple demandes WO03/002648 et WO03/002649 précitées).

L'état physique sous lequel se présente la charge renforçante non-noire (en particulier inorganique) est indifférent, que ce soit sous forme de poudre, de microperles, de granulés, de billes ou toute autre forme densifiée appropriée. Bien entendu, on entend également par charge renforçante non-noire des mélanges de différentes charges renforçantes non-noires, en particulier des charges inorganiques telles que des charges siliceuses et/ou alumineuses hautement dispersibles telles que décrites précédemment.

Préférentiellement, une telle charge inorganique renforçante consiste en des nanoparticules dont la taille moyenne en masse est inférieure à 500 nm, le plus souvent comprise entre 20 et 200 nm, en particulier et plus préférentiellement comprise entre 20 et 150 µm. Cette taille moyenne peut être mesurée de manière bien connue, après dispersion par désagglomération aux ultrasons de la charge à analyser dans l'eau (ou solution aqueuse contenant un agent tensioactif), par exemple au moyen d'un sédimentomètre centrifuge à détection rayons X type « XDC » (X-rays Disk Centrifuge), commercialisé par la société Brookhaven Instruments, selon le mode opératoire qui suit : on réalise une suspension de 3,2 g d'échantillon de charge inorganique à analyser dans 40 ml d'eau, par action durant 8 minutes, à 60% de puissance (60% de la position maxi du *"output control*"), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 minutes, la distribution en masse des tailles de particules et la taille moyenne en masse des particules d_{w} sont calculées par le logiciel du sédimentomètre XDC.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression *relative p*/*po :* 0.05 à 0.17). La surface spécifique CTAB est la surface externe déterminée selon la norme française NF T 45-007 de novembre 1987 (méthode B).

De préférence, la charge renforçante non-noire est de la silice.

De manière préférentielle, le taux de charge renforçante non-noire, en particulier de silice, est compris entre 60 et 120 pce, notamment entre 70 et 100 pce.

Pour coupler la charge renforçante non-noire à l'élastomère diénique, on peut utiliser de manière bien connue un agent de couplage (ou agent de liaison) au moins bifonctionnel destiné à assurer une connexion suffisante, de nature chimique et/ou physique, entre la charge (surface de ses particules) et l'élastomère diénique. On utilise en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 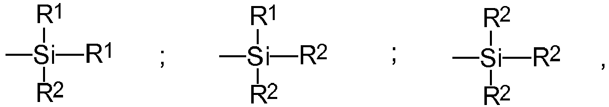
dans lesquelles :
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule (I) ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes selon l'invention, la teneur en agent de couplage est préférentiellement comprise entre 2 et 12 pce, plus préférentiellement entre 3 et 8 pce.

La composition de caoutchouc de la bande de roulement du pneumatique de l'invention est dépourvue de noir de carbone ou en comporte moins de 3 pce, de préférence moins de 2 pce, ceci afin d'éviter que le noir de carbone puisse jouer, en raison de ses propriétés anti-UV connues, un rôle antagoniste donc non souhaitable par rapport à la photoréticulation visée de la résine polymère liquide photoréticulable.

Préférentiellement, on utilise du noir de carbone en très faible quantité, entre 0,05 et 2,0 pce, en particulier entre 0,05 et 1,5 pce, fourchette de concentration étroite dans laquelle le noir conserve sa fonction d'agent de coloration noire de la composition mais ne remplit plus celle d'agent anti-UV.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les pneumatiques. Parmi ces derniers, on peut citer les noirs de carbone renforçants des séries (grades ASTM) 100, 200 ou 300 utilisés dans les bandes de roulement de ces pneumatiques (par exemple N115, N134, N234, N326, N330, N339, N347, N375), mais encore ceux du type non-renforçants (car moins structurés) des séries plus élevées 400 à 700 (par exemple les noirs N660, N683, N772). On pourrait aussi utiliser à titre d'exemple des noirs non-renforçants dits "noirs d'encre" utilisés comme pigments noirs dans les encres d'imprimerie, les peintures.

Les noirs de carbone peuvent être utilisés à l'état isolé, tels que disponibles commercialement, ou sous tout autre forme, par exemple comme support de certains des additifs de caoutchouterie utilisés.

### 4.4. Résine polymère liquide photoréticulable

Une caractéristique essentielle de la présente invention réside dans l'utilisation d'une résine polymère liquide photoréticulable dans la composition de caoutchouc formant au moins la surface de la bande de roulement selon l'invention, c'est-à-dire la portion de la bande de roulement qui est destinée à entrer au contact de la route lors du roulage du pneumatique.

Ce polymère peut-être un oligomère, un pré-polymère, un homopolymère ou un copolymère. Sa caractéristique essentielle est qu'il est d'une part liquide (à température ambiante, soit 23°C) à l'état non (photo)réticulé et d'autre part fonctionnalisé c'est-à-dire porteur d'un ou plusieurs groupes ou fonctions réticulables (polymérisables) sous l'action du rayonnement UV. La conséquence est un durcissement de la matrice de caoutchouc comportant ce type de polymère, lorsque cette matrice, tout au moins sa surface, est exposée aux UV.

Préférentiellement, ce polymère est un oligomère, typiquement comportant 3 à 20 unités monomère. Dans un tel cas préférentiel, le nombre de fonctions capables de réagir sous l'action des UV est préférentiellement compris dans un domaine de 1 à 4 par squelette hydrocarboné oligomère. La ou les fonctions réticulables sont plus préférentiellement en position téléchélique, c'est-à-dire aux extrémités dudit squelette hydrocarboné oligomère.

Selon un mode de réalisation préférentiel, on utilise une résine photoréticulable du type radicalaire (polymérisant par un mécanisme radicalaire) ou cationique (polymérisant par voie cationique).

Plus préférentiellement, la résine photoréticulable est choisie dans le groupe constitué par les résines acrylate, méthacrylate, époxyde, oxétane, polyester insaturé, vinyléther, vinylester, et leurs mélanges. De telles dénominations se réfèrent de manière bien connue à la nature des groupes fonctionnels photo-réticulables (ou photo-polymérisables) portés par le polymère (ou préférentiellement oligomère) constituant le squelette hydrocarboné des ces résines.

Plus préférentiellement encore, parmi celles énoncées ci-dessus, la résine photoréticulable utilisée est une résine acrylate (par exemple monoacrylate, diacrylate, triacrylate, époxy-acrylate, époxy-diacrylate, uréthane-acrylate, uréthane-diacrylate) ou une résine méthacrylate (par exemple monométhacrylate, diaméthacrylate, uréthane-monométhacrylate, uréthane-diméthacrylate).

On peut toutefois citer, à titre d'autres exemples possibles, les résines fumarate (par exemple monofumarate, difumarate), maléate (par exemple monomaléate, dimaléate), et les mélanges de telles résines.

Selon un autre mode de réalisation préférentiel, le polymère ou oligomère liquide constituant la résine est un polymère du type diénique ; en particulier, ce polymère diénique, par définition liquide, est de préférence un polybutadiène ou polyisoprène porteur du groupe fonctionnel photo -réticulable.

Ainsi, plus préférentiellement encore, la résine polymère liquide photoréticulable est un poly(butadiène-acrylate) ou un poly(butadiène-méthacrylate) ou un mélange des deux.

La masse molaire moyenne en masse (notée Mw) du polymère liquide précédemment décrit, en particulier lorsqu'il s'agit d'un polymère diénique liquide, est de préférence comprise entre 200 et 5000 g/mol. Cette grandeur est bien connue de l'homme du métier, disponible notamment auprès des fournisseurs de polymère, mesurable par ailleurs par des techniques conventionnelles telles que GPC (*"Gel Permeation Chromatography"*) ou SEC (*"Size Exclusion Chromatography").*

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 µm, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux " Styragel HT6E"). Le volume injecté de la solution de l'échantillon de polymère est par exemple de 100 ul. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

La composition de caoutchouc peut comporter également, en combinaison avec la résine polymère liquide photoréticulable précédemment décrite, un photo-amorceur destiné à favoriser, accélérer le processus de photoréticulation de surface de la bande de roulement lorsque cette dernière est soumise à une exposition au rayonnement UV.

De manière connue, les photo-amorceurs (également appelés photo-initiateurs ou photo-activateurs) sont des composés stables aptes à libérer, lorsqu'ils sont exposés à une lumière de longueur d'onde appropriée, des espèces radicalaires ou ioniques qui vont favoriser et accélérer les processus de photoréticulation ou de photo-oxydation.

Ces photo-initiateurs utilisables sont de préférence du type radicalaire ou cationique. De tels composés sont couramment utilisés dans les domaines de la photopolymérisation de monomères multifonctionnels, du traitement de surface de matériaux par des revêtements protecteurs, des arts graphiques et en électronique pour la réalisation de microcircuits. Ils ont été également décrits (voir demande de brevet WO 2006/077059) dans des bandes de roulement de pneumatiques photo-oxydables présentant une adhérence améliorée sur route mouillée.

Comme photo-initiateurs cationiques peuvent être cités par exemple les sels d'onium, plus particulièrement les sels de sulfonium tels que sels de triarylsulfonium ou les sels d'iodonium tels que sels de diaryliodonium.

On utilise préférentiellement un photo-initiateur du type radicalaire, plus préférentiellement choisi parmi les cétones aromatiques, notamment celles choisies dans le groupe constitué par les cétals (notamment dicétals) benzyliques, les benzoïnes (notamment éthers de benzoïnes), les α,α-dialkoxy-acétophénones, les α-hydroxy-alkylphénones, les cétones α-amino aromatiques (ou α-amino alkylphénones), les oxydes d'acylphosphines, les benzophénones ou thioxanthones en combinaison avec un donneur d'hydrogène (e.g., une amine tertiaire), et les mélanges de tels composés.

L'homme du métier saura, le cas échéant, ajuster la quantité de photo-initiateur en fonction des applications particulières visées. Cette quantité est de préférence comprise entre 0,1 et 10 pce, plus préférentiellement entre 0,2 et 5 pce.

Les photo-initiateurs précédemment décrits peuvent être utilisés seuls lorsqu'ils sont exposés à un rayonnement UV ou, lorsqu'ils sont exposés à la lumière visible, en combinaison avec des photosensibilisateurs aptes à activer leur propre action photo-oxydante. De tels photosensibilisateurs sont par exemple des colorants tels que des phtaléïnes (éosine, érythrosine, éthyléosine, phloxine, rose de bengale) et des thiazines (thionine et bleu de méthylène). S'ils sont utilisés sans photosensibilisateurs, les photo-initiateurs seront préférentiellement choisis de telle manière que leur spectre d'absorption UV et le spectre d'émission de la source lumineuse (qu'elle soit naturelle comme artificielle) responsable de la photo-oxydation de la bande de roulement, aient bien une zone de recouvrement.

### 4.5. Microparticules de sel métallique hydrosoluble

La composition de caoutchouc de la bande de roulement du pneu de l'invention a pour autre caractéristique essentielle de comporter entre 2 et 60 pce de microparticules de sel métallique hydrosoluble, de préférence sous forme de poudre.

Par microparticules, on entend par définition et de manière générale des particules de taille (i.e., plus grande dimension dans le cas de particules anisométriques) micrométrique, c'est-à-dire dont la taille médiane (exprimée en poids) est comprise entre 1 µm et 1 mm. De préférence, la taille médiane est comprise entre 2 µm et 800 µm, plus préférentiellement entre 3 et 600 µm.

En dessous des minima indiqués ci-dessus, l'effet technique visé (à savoir la création d'une microrugosité adaptée) risque d'être insuffisant alors qu'au-delà des maxima indiqués, on s'expose à différents inconvénients : outre une perte d'esthétique possible (particules trop visibles à la surface de la bande de roulement) et un risque de décohésion, lors du roulage, d'éléments de sculpture de taille relativement importante, on a constaté que la performance d'adhérence sur glace fondante pouvait être dégradée.

Pour toutes ces raisons, on préfère que les microparticules aient une taille médiane comprise entre 5 et 500 µm, en particulier dans un domaine de 5 à 200 µm. Ce domaine de taille particulièrement préférentiel semble correspondre à un compromis optimisé entre d'une part la rugosité de surface recherchée et d'autre part un bon contact entre la composition de caoutchouc et la glace.

D'autre part, pour des raisons identiques à celles exposées ci-dessus, le taux de microparticules est de préférence compris entre 5 et 50 pce, plus préférentiellement compris dans un domaine de 10 à 40 pce.

Selon un autre mode de réalisation préférentiel, le sel métallique est choisi dans le groupe constitué par les chlorures, les carbonates (incluant notamment les hydroxycarbonates, les bicarbonates), les sulfates et les mélanges de tels sels. Plus préférentiellement encore, le sel choisi est un sulfate.

Selon un autre mode de réalisation préférentiel, le métal du sel métallique est un métal alcalin ou alcalino-terreux, plus préférentiellement choisi dans le groupe constitué par sodium (Na), potassium (K), magnésium (Mg), calcium (Ca) et les mélanges de tels éléments. Plus préférentiellement encore, le métal est le magnésium ou le potassium.

Plus préférentiellement encore, on utilise un sulfate de magnésium ou un sulfate de potassium, ou un mélange de ces deux sels ; de tels sels métalliques sont connus, ils ont été notamment décrits dans les demandes de brevet précitées WO 2010/009850, WO 2011/073188, WO 2011/086061, WO 2012/052331, WO 2012/085063. On pourra utiliser plus particulièrement des microparticules de sulfate de magnésium à distribution de taille étroite telles que décrites dans la demande WO 2012/052331 ou des microparticules de sulfate de potassium telles que décrites dans la demande WO2012/085063.

Pour l'analyse de la granulométrie et le calcul de la taille médiane des microparticules (ou diamètre médian pour des microparticules supposées sensiblement sphériques), différentes méthodes connues sont applicables, par exemple par diffraction laser (par exemple selon normes ISO-8130-13 ou ISO 13320-1 citées notamment dans les demandes ci-dessus).

On peut aussi utiliser de manière simple et préférentielle une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression égale à 1,26, avec des mailles de 1000, 800, 630, 500, 400, ... 100, 80, 63 µm, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

### 4.6. Additifs divers

Les compositions de caoutchouc utilisées dans les bandes de roulement selon l'invention peuvent comporter également tout ou partie des additifs usuels habituellement utilisés dans les compositions d'élastomères destinées à la fabrication de bandes de roulement pour pneumatiques, notamment pour pneumatiques hiver, comme par exemple des agents de protection tels que cires anti-ozone, anti-ozonants chimiques, anti-oxydants, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir des activateurs de couplage lorsque qu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

### 4.7. Fabrication des compositions de caoutchouc et des bandes de roulement

Les compositions de caoutchouc sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions, aptes à présenter, après photo-oxydation de leur surface, une adhérence améliorée sur glace, comporte par exemple et de préférence les étapes suivantes :
- incorporer à l'élastomère diénique (ou au mélange d'élastomères diéniques), dans un mélangeur, plus de 30 pce d'un agent plastifiant liquide, entre 50 et 150 pce d'une charge renforçante non-noire, optionnellement du noir de carbone à un taux inférieur à 3 pce, entre 5 et 50 pce d'une résine polymère liquide photoréticulable, et entre 2 et 60 pce de microparticules de sel métallique hydrosoluble, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques min, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée, par exemple sous la forme d'un profilé de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Comme expliqué précédemment, une ultime étape de photo-oxydation de la surface de la bande de roulement confère à cette dernière une adhérence améliorée sur glace sèche comme sur glace fondante. Cette étape complémentaire peut consister en une simple exposition naturelle au rayonnement UV-visible ou préférentiellement en un vieillissement artificiel accéléré, par exemple à l'aide d'une ou plusieurs lampe(s) émettant dans l'UV-visible (e.g. lampe à vapeur de mercure, lampe au xénon, lampe à fluorescence, lampes aux halogénures métalliques), ou encore dans une enceinte de photovieillissement accéléré pouvant comporter une ou plusieurs desdites lampes.

La composition de caoutchouc précédemment décrite peut constituer la totalité ou une partie seulement de la bande de roulement du pneumatique selon l'invention, dans le cas d'une bande de roulement de type composite qui serait formée de plusieurs compositions de caoutchouc de formulations différentes, étant entendu que, dans ce deuxième cas, la composition précédemment décrite à base de résine polymère liquide photoréticulable et de microparticules de sel métallique hydrosoluble, est celle constituant la surface de la portion de bande de roulement destinée à entrer au contact avec le sol (glace) lors du roulage du pneumatique, à l'état neuf comme au cours de son usage ultérieur.

## Revendications

1. Pneumatique dont la bande de roulement comporte une composition de caoutchouc à base d'au moins un élastomère diénique, plus de 30 pce d'un plastifiant liquide, entre 50 et 150 pce d'une charge renforçante non-noire, optionnellement du noir de carbone à un taux inférieur à 3 pce, entre 5 et 50 pce d'une résine polymère liquide photoréticulable, et entre 2 et 60 pce de microparticules de sel métallique hydrosoluble.

2. Pneumatique selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

3. Pneumatique selon la revendication 2, dans lequel ladite composition de caoutchouc comporte 50 à 100 pce de caoutchouc naturel ou de polyisoprène de synthèse, ou 50 à 100 pce d'un polybutadiène ayant un taux de liaisons cis-1,4 supérieur à 90%.

4. Pneumatique selon l'une quelconque des revendications 1 à 3, dans lequel le taux de plastifiant liquide est supérieur à 40 pce, de préférence compris dans un domaine de 50 à 100 pce.

5. Pneumatique selon l'une quelconque des revendications 1 à 4, dans lequel le plastifiant liquide est choisi dans le groupe constitué par les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

6. Pneumatique selon l'une quelconque des revendications 1 à 5, dans lequel le taux de charge renforçante non-noire est compris entre 60 et 120 pce, de préférence entre 70 et 100 pce.

7. Pneumatique selon l'une quelconque des revendications 1 à 6, dans lequel la charge renforçante non noire est une charge inorganique, de préférence de la silice.

8. Pneumatique selon l'une quelconque des revendications 1 à 7, dans lequel la résine polymère liquide photoréticulable est choisie dans le groupe constitué par les résines acrylate, méthacrylate, époxyde, oxétane, polyester insaturé, vinyléther, vinylester et les mélanges de telles résines, de préférence est une résine acrylate ou méthacrylate.

9. Pneumatique selon l'une quelconque des revendications 1 à 8, dans lequel la résine polymère liquide photoréticulable est un polymère diénique, de préférence un polybutadiène ou un polyisoprène.

10. Pneumatique selon les revendications 8 et 9, dans lequel la résine polymère liquide photoréticulable est un poly(butadiène-acrylate) ou un poly(butadiène-méthacrylate).

11. Pneumatique selon l'une quelconque des revendications 1 à 10, dans lequel le taux de microparticules de sel métallique hydrosoluble est compris entre 5 et 50 pce, de préférence dans un domaine de 10 à 40 pce.

12. Pneumatique selon l'une quelconque des revendications 1 à 11, dans lequel la taille médiane en poids des microparticules de sel métallique hydrosoluble est comprise entre 2 et 800 µm, de préférence entre 3 et 600 µm.

13. Pneumatique selon l'une quelconque des revendications 1 à 12, dans lequel le sel métallique est choisi dans le groupe constitué par les chlorures, les carbonates, les sulfates et les mélanges de tels sels.

14. Pneumatique selon l'une quelconque des revendications 1 à 13, dans lequel le métal du sel métallique est un métal alcalin ou alcalino-terreux, de préférence choisi dans le groupe constitué par sodium, potassium, magnésium, calcium, et les mélanges de tels éléments.

15. Pneumatique selon les revendications 13 et 14, dans lequel le sel métallique est un sulfate de magnésium ou de potassium.

## Patentansprüche

1. Reifen, dessen Lauffläche eine Kautschukzusammensetzung auf Basis von mindestens einem Dienelastomer, mehr als 30 phe eines flüssigen Weichmachers, zwischen 50 und 150 phe eines nicht-schwarzen verstärkenden Füllstoffs, gegebenenfalls Ruß in einem Gehalt von weniger als 3 phe, zwischen 5 und 50 phe eines photovernetzbaren flüssigen Polymerharzes und zwischen 2 und 60 phe Mikroteilchen aus wasserlöslichem Metallsalz umfasst.

2. Reifen nach Anspruch 1, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Reifen nach Anspruch 2, wobei die Zusammensetzung 50 bis 100 phe Naturkautschuk oder synthetisches Polyisopren oder 50 bis 100 phe eines Polybutadiens mit einem Gehalt an cis-1,4-Bindungen von mehr als 90% umfasst.

4. Reifen nach einem der Ansprüche 1 bis 3, wobei der Gehalt an flüssigem Weichmacher mehr als 40 phe beträgt und vorzugsweise in einem Bereich von 50 bis 100 phe liegt.

5. Reifen nach einem der Ansprüche 1 bis 4, wobei der flüssige Weichmacher aus der Gruppe bestehend aus Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

6. Reifen nach einem der Ansprüche 1 bis 5, wobei der Gehalt an nicht-schwarzem verstärkendem Füllstoff zwischen 60 und 120 phe und vorzugsweise zwischen 70 und 100 phe liegt.

7. Reifen nach einem der Ansprüche 1 bis 6, wobei es sich bei dem nicht-schwarzen verstärkenden Füllstoff um einen anorganischen Füllstoff, vorzugsweise Kieselsäure, handelt.

8. Reifen nach einem der Ansprüche 1 bis 7, wobei das photovernetzbare flüssige Polymerharz aus der Gruppe bestehend aus Acrylat-, Methacrylat-, Epoxid-, Oxetan-, ungesättigten Polyester-, Vinylether- und Vinylesterharzen und Mischungen derartiger Harze ausgewählt ist und vorzugsweise ein Acrylat- oder Methacrylatharz ist.

9. Reifen nach einem der Ansprüche 1 bis 8, wobei es sich bei dem photovernetzbaren flüssigen Polymerharz um ein Dienpolymer, vorzugsweise ein Polybutadien oder ein Polyisopren, handelt.

10. Reifen nach den Ansprüchen 8 und 9, wobei es sich bei dem photovernetzbaren flüssigen Polymerharz um ein Poly(butadien-acrylat) oder ein Poly(butadien-methacrylat) handelt.

11. Reifen nach einem der Ansprüche 1 bis 10, wobei der Gehalt an Mikroteilchen aus wasserlöslichem Metallsalz zwischen 5 und 50 phe und vorzugsweise in einem Bereich von 10 bis 40 phe liegt.

12. Reifen nach einem der Ansprüche 1 bis 11, wobei die gewichtsmittlere Größe der Mikroteilchen aus wasserlöslichem Metallsalz zwischen 2 und 800 µm und vorzugsweise zwischen 3 und 600 µm liegt.

13. Reifen nach einem der Ansprüche 1 bis 12, wobei das Metallsalz aus der Gruppe bestehend aus Chloriden, Carbonaten, Sulfaten und Mischungen derartiger Salze ausgewählt ist.

14. Reifen nach einem der Ansprüche 1 bis 13, wobei es sich bei dem Metall des Metallsalzes um ein Alkali- oder Erdalkalimetall, das vorzugsweise aus der Gruppe bestehend aus Natrium, Kalium, Magnesium, Calcium und Mischungen derartiger Metalle ausgewählt ist, handelt.

15. Reifen nach den Ansprüchen 13 und 14, wobei es sich bei dem Metallsalz um Magnesium- oder Kaliumsulfat handelt.

## Claims

1. Tyre, the tread of which comprises a rubber composition based on at least one diene elastomer, more than 30 phr of a liquid plasticizer, between 50 and 150 phr of a non-black reinforcing filler, optionally carbon black at a content of less than 3 phr, between 5 and 50 phr of a liquid photocrosslinkable polymer resin and between 2 and 60 phr of water-soluble metal salt microparticles.

2. Tyre according to Claim 1, in which the diene elastomer is selected from the group consisting of natural rubber, synthetic polyisoprenes, polybutadienes, butadiene copolymers, isoprene copolymers and the mixtures of these elastomers.

3. Tyre according to Claim 2, in which the said rubber composition comprises from 50 to 100 phr of natural rubber or synthetic polyisoprene, or from 50 to 100 phr of a polybutadiene having a content of cis-1,4- bonds of greater than 90%.

4. Tyre according to any one of Claims 1 to 3, in which the content of liquid plasticizer is greater than 40 phr, preferably within a range from 50 to 100 phr.

5. Tyre according to any one of Claims 1 to 4, in which the liquid plasticizer is selected from the group consisting of polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

6. Tyre according to any one of Claims 1 to 5, in which the content of non-black reinforcing filler is between 60 and 120 phr, preferably between 70 and 100 phr.

7. Tyre according to any one of Claims 1 to 6, in which the non-black reinforcing filler is an inorganic filler, preferably silica.

8. Tyre according to any one of Claims 1 to 7, in which the liquid photocrosslinkable polymer resin is selected from the group consisting of acrylate, methacrylate, epoxide, oxetane, unsaturated polyester, vinyl ether and vinyl ester resins and the mixtures of such resins, preferably is an acrylate or methacrylate resin.

9. Tyre according to any one of Claims 1 to 8, in which the liquid photocrosslinkable polymer resin is a diene polymer, preferably a polybutadiene or a polyisoprene.

10. Tyre according to Claims 8 and 9, in which the liquid photocrosslinkable polymer resin is a poly(butadiene/acrylate) or a poly(butadiene/methacrylate).

11. Tyre according to any one of Claims 1 to 10, in which the content of water-soluble metal salt microparticles is between 5 and 50 phr, preferably within a range from 10 to 40 phr.

12. Tyre according to any one of Claims 1 to 11, in which the median size by weight of the water-soluble metal salt microparticles is between 2 and 800 µm, preferably between 3 and 600 µm.

13. Tyre according to any one of Claims 1 to 12, in which the metal salt is selected from the group consisting of chlorides, carbonates, sulphates and the mixtures of such salts.

14. Tyre according to any one of Claims 1 to 13, in which the metal of the metal salt is an alkali metal or alkaline earth metal preferably selected from the group consisting of sodium, potassium, magnesium, calcium and the mixtures of such elements.

15. Tyre according to Claims 13 and 14, in which the metal salt is a magnesium sulphate or a potassium sulphate.
